# EUROPÄISCHE PATENTSCHRIFT

(11) **EP 1 843 445 B1**
(45) Veröffentlichungstag und Bekanntmachung des Hinweises auf die Patenterteilung: **22.07.2009**
(21) Anmeldenummer: 06007091.9
(22) Anmeldetag: 04.04.2006
(51) Int. Cl.: H02J 7/00, H02H 7/18, H02H 5/04

(54) **Akkupack für ein Elektrohandwerkzeuggerät**
Battery pack for electric power tool
Bloc-batterie pour un outil portatif électrique

(43) Veröffentlichungstag der Anmeldung: 10.10.2007
(73) Patentinhaber: Metabowerke GmbH, 72622 Nürtingen (DE)
(72) Erfinder: Wiesner, Bernd, Dipl.-Ing., 73277 Owen (DE)
(74) Vertreter: Friz, Oliver

(56) Entgegenhaltungen:
- EP-A- 1 612 907
- US-A- 5 518 832
- PATENT ABSTRACTS OF JAPAN Bd. 1998, Nr. 02, 30. Januar 1998 (1998-01-30) -& JP 09 285030 A (MAKITA CORP), 31. Oktober 1997 (1997-10-31)

## Beschreibung

Die Erfindung betrifft einen Akkupack für ein Elektrohandwerkzeuggerät, welcher mittels eines Ladegeräts wiederaufladbar ist, mit einem analogen temperaturabhängigen Widerstand, mit zwei Ladekontakten und einem dritten Kontakt, über den der Zustand des temperaturabhängigen Widerstands mittels einer im Elektrohandwerkzeuggerät oder im Ladegerät angeordneten Steuerelektronik erfassbar und auswertbar ist, und mit einer mit dem temperaturabhängigen Widerstand zusammenwirkenden Schutzelektronik im Akkupack.

Ein derartiger Akkupack ist bekannt aus EP 1 612 907 A2. Es ist insbesondere bekannt, bei Akkupacks für Elektrohandwerkzeuggeräte während des Ladens und Entladens des Akkupacks Parameter wie z. B. die Spannungen der einzelnen Akkuzellen, die Stärke und die Charakteristik des Stroms sowie die Temperatur zu überwachen und dementsprechend bei Über- oder Unterschreiten vorgegebener Grenzwerte oder Charakteristiken einen Fehlerzustand zu detektieren. Im einfachsten Fall kann eine Alarmmeldung an den Benutzer des Akkupacks bzw. des Elektrohandwerkzeuggeräts oder Ladegeräts gegeben werden, so dass der Benutzer dann in geeigneter Weise reagieren kann, oder der Fehlerzustand wird durch Zusammenwirken der Schutzelektronik des Akkupacks mit der Steuerelektronik des Elektrohandwerkzeuggeräts oder Ladegeräts erfasst und es wurden automatisch Steuervorgänge ausgelöst, indem beispielsweise der Ladevorgang oder der Betrieb des Elektrohandwerkzeuggeräts unterbrochen wird, um den Akkupack nicht zu beschädigen.

Bei der genannten EP 1 612 907 A2 wirkt die Schutzelektronik des Akkupacks mit dem temperaturabhängigen Widerstand (Widerstand mit negativem Temperaturkoeffizienten) derart zusammen, dass über einen von der Schutzelektronik des Akkupacks ansteuerbaren Schalter der temperaturabhängige Widerstand in einem erkannten Fehlerzustand des Akkupacks kurzgeschlossen wird. Es wird also für die Steuerelektronik des Elektrohandwerkzeuggeräts oder des Ladegeräts ein auf Null gehender temperaturabhängiger Widerstand simuliert, was eine unendlich hohe Temperatur bedeuten würde. In der Folge reagiert die Steuerelektronik des Elektrohandwerkzeuggeräts oder Ladegeräts indem sie einen Leistungsschalter zum sofortigen Unterbrechen des Strompfads zum Akkupack ansteuert.

Der vorliegenden Erfindung liegt die Aufgabe zugrunde, einen Akkupack der eingangs beschriebenen Art noch weitergehend im Hinblick auf die Betriebssicherheit und Nutzbarkeit zu verbessern.

Diese Aufgabe wird bei einem gattungsgemäßen Akkupack erfindungsgemäß dadurch gelöst, dass die Schutzelektronik im Akkupack einen mit dem temperaturabhängigen Widerstand in Reihe angeordneten Schalter umfasst, der in einem von der Schutzelektronik erkannten Fehlerzustand des Akkupacks eine Zuleitung des temperaturabhängigen Widerstands unterbricht, was durch die Steuerelektronik im Elektrohandwerkzeuggerät oder im Ladegerät erfassbar und auswertbar ist, und dass die Schutzelektronik im Akkupack so ausgebildet ist, dass die Unterbrechung der Zuleitung des temperaturabhängigen Widerstands im Fehlerzustand in Abhängigkeit bestimmter Bedingungen periodisch erfolgt.

Im Unterschied zum genannten Stand der Technik wird bei der vorliegenden Erfindung der temperaturabhängige Widerstand im Akkupack in einem erkannten Fehlerzustand nicht kurzgeschlossen, sondern seine Zuleitung wird unterbrochen. Der über den dritten Kontakt und einen Ladekontakt abgreifbare Widerstandswert, der von der Steuerelektronik des Elektrohandwerkzeuggeräts oder Ladegeräts erfassbar und auswertbar ist, wird demgemäß unendlich, was ebenfalls von der Steuervorrichtung als Fehlerzustand "interpretiert" werden kann, so dass entsprechende Steuermaßnahmen, wie eine Unterbrechung des Strompfads, eingeleitet werden können.

Mit der vorliegenden Erfindung ist auch der Vorteil verbunden, dass ein Bruch der Kontaktierung des temperaturabhängigen Widerstands ebenfalls als Fehlerzustand erkannt werden kann, was die Betriebssicherheit des Akkupacks erhöht.

Durch periodische Unterbrechung der Zuleitung des temperaturabhängigen Widerstands im Fehlerzustand ist es möglich, verschiedene Fehlerzustände in verschiedener Weise in Richtung auf die Steuerelektronik des Elektrohandwerkzeuggeräts oder Ladegeräts "mitzuteilen". Es wäre auch denkbar, dass unterschiedliche Formen periodischer Unterbrechung vorgesehen sind.

Nach einem weiteren Erfindungsgedanken ist die (Schutz-) Elektronik des Akkupacks so ausgebildet, dass der dritte Kontakt des Akkupacks zur Energieversorgung der (Schutz-) Elektronik des Akkupacks verwendbar ist. Auf diese Weise kann auch bei tiefentladenem Akkupack eine Erkennung des Akkutyps ermöglicht werden. Dies ist insoweit wesentlich, als insbesondere NiCd- und Ni-Metallhydrid-Akkupacks und Li-Ionen-Akkupacks eines Herstellers häufig baugleich und damit austauschbar angeboten werden, sich jedoch im Hinblick auf ihre zulässigen Ladeparameter wesentlich voneinander unterscheiden. Insofern erweist es sich als vorteilhaft, wenn die (Schutz-) Elektronik des Akkupacks auf der dem dritten Kontakt zugewandten Seite des temperaturabhängigen Widerstands mit dem dritten Kontakt verbunden ist, so dass (auch bei unterbrochener Zuleitung zu dem temperaturabhängigen Widerstand) eine Energieversorgung zu dem genannten Zwecke möglich ist.

Nach einem weiteren Erfindungsgedanken erweist es sich als vorteilhaft, wenn die (Schutz-) Elektronik des Akkupacks so ausgebildet ist, dass der dritte Kontakt auch zur Datenübertragung zwischen der Elektronik des Akkupacks und der Steuerelektronik des Elektrohandwerkzeuggeräts oder Ladegeräts verwendbar ist, während die Zuleitung des temperaturabhängigen Widerstands unterbrochen ist. Der Akkupack kann dann beispielsweise gespeicherte Ladeparameter an die Steuerelektronik des Elektrohandwerkzeuggeräts oder Ladegeräts übertragen, so dass eine Auswertung des Fehlerzustands und eine Identifizierung der Ursachen des Fehlerzustands sowie die Einleitung entsprechender Maßnahmen durch die Steuerelektronik erfolgen kann.

Nach einem weiteren Erfindungsgedanken ist in einer Zuleitung zu einem Ladekontakt innerhalb des Akkupacks ein Shunt-Widerstand zur Stromüberwachung vorgesehen, der von der Schutzelektronik des Akkupacks zusätzlich überwacht wird, indem der Widerstandswert kontinuierlich oder quasikontinuierlich erfasst und ausgewertet wird.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform des erfindungsgemäßen Akkupacks. In der Zeichnung zeigt:
- Figur 1: eine schematische Darstellung der Funktionsweise und der Komponenten eines erfindungsgemäßen Akkupacks im Zusammenwirken mit einem Elektrohandwerkzeuggerät und
- Figur 2: eine schematische Darstellung der Funktionsweise und der Komponenten eines erfindungsgemäßen Akkupacks im Zusammenwirken mit einem Ladegerät.

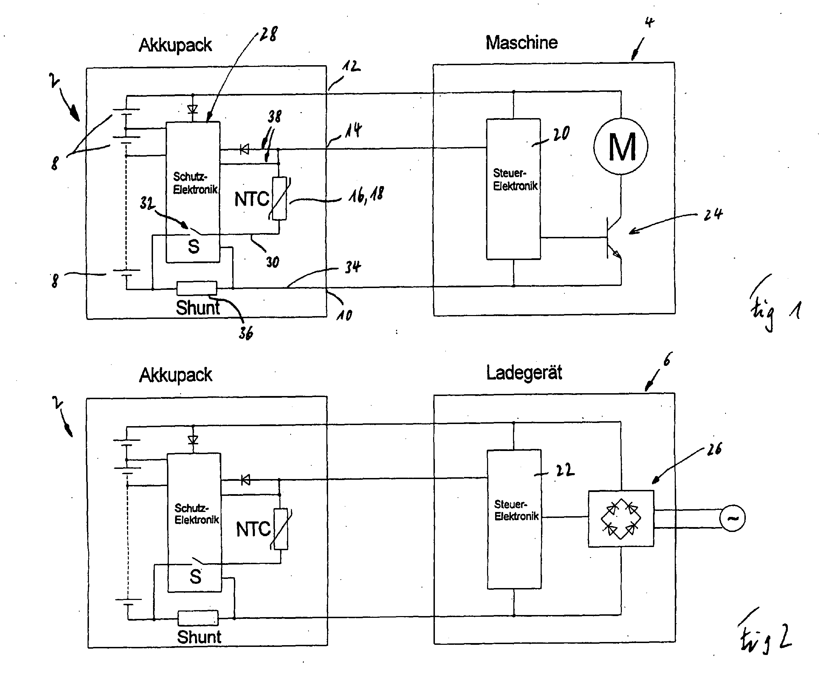

Die Figuren zeigen einen insgesamt mit dem Bezugszeichen 2 bezeichneten erfindungsgemäßen Akkupack in Verbindung mit einem schematisch angedeuteten Elektrohandwerkzeuggerät 4 (Figur 1) bzw. mit einem Ladgerät 6 (Figur 2). Der erfindungsgemäße Akkupack umfasst mehrere Akkuzellen 8, die über einen ersten Ladekontakt 10 und einen zweiten Ladekontakt 12 mit dem Elektrohandwerkzeuggerät 4 bzw. dem Ladegerät 6 verbindbar sind. Des Weiteren umfasst der Akkupack 2 einen dritten Kontakt 14, über den der Zustand eines temperaturabhängigen Widerstands 16, vorzugsweise eines NTC-Widerstands 18, mittels einer im Elektrohandwerkzeuggerät 4 bzw. in dem Ladegerät 6 vorgesehenen Steuerelektronik 20 bzw. 22 erfassbar und auswertbar ist.

Wenn beispielsweise die Temperatur innerhalb des Akkupacks zunimmt, so erniedrigt sich der Widerstandswert des temperaturabhängigen Widerstands 16. Fällt der Widerstand unter einen vorgegebenen oder vorgebbaren Grenzwert, so ist dies durch die Steuerelektronik 20, 22 erfassbar, und es können geeignete Maßnahmen, wie z. B. die Unterbrechung des Motorstroms oder Ladestroms über einen angedeuteten Leistungsschalter 24 im Elektrohandwerkzeuggerät 4 bzw. 26 im Ladegerät 6 unterbrochen werden.

Des Weiteren umfasst der erfindungsgemäße Akkupack 2 eine Schutzelektronik 28, die mit dem temperaturabhängigen Widerstand 16 über einen in einer Zuleitung 30 vorgesehenen Schalter 32 zusammenwirkt. Wenn die Schutzelektronik 28 einen Fehlerzustand des Akkupacks erkennt, so steuert sie den Schalter 32 dahingehend an, dass dieser öffnet und die Zuleitung 30 zum temperaturabhängigen Widerstand 16 unterbricht. Über den dritten Kontakt 14, der auch als Steueranschluss bezeichnet werden kann, wird somit von der Steuerelektronik 20 bzw. 22 ein unendlich hoher Widerstand erfasst, und es werden geeignete Steuervorgänge ausgelöst, beispielsweise wird der Ladestrom oder Motorstrom über den Leistungsschalter 24, 26 unterbrochen.

Der temperaturabhängige Widerstand 16 bildet also einen im normalen Betriebszustand von der Schutzelektronik 28 an sich unabhängigen Temperatursensor. Lediglich in einem von der Schutzelektronik 28 des Akkupacks 2 erkannten Fehlerzustand wird die Zuleitung 30 zum temperaturabhängigen Widerstand 16 unterbrochen. Die Schutzelektronik 28 "überwacht" an sich beliebige Betriebsparameter des Akkupacks 2. Beispielsweise überwacht sie die Spannung der jeweiligen Akkuzellen 8. Im beispielhaft dargestellten Fall ist zusätzlich in einer Zuleitung 34 eines Ladekontakts 10 ein Shunt-Widerstand 36 vorgesehen, mit dem der Lade- bzw. Entladestrom durch die Schutzelektronik 28 erfasst und ausgewertet wird.

Die Schutzelektronik 28 könnte in vorteilhafter Weise auch so ausgebildet sein, dass sie beim Vorliegen bestimmter Fehlerzustände den Schalter 32 unterschiedlich ansteuert, also entweder dauerhaft, also statisch öffnet, oder aber periodisch öffnet. Bei der periodischen Unterbrechung der Zuleitung zum temperaturabhängigen Widerstand 16 könnten verschiedene Muster unterschiedliche Fehlerzustände codieren.

Im Falle einer dauerhaften Unterbrechung der Zuleitung 30 zum temperaturabhängigen Widerstand 16 ist die Schutzelektronik 28 des Weiteren über Schaltungskomponenten 38 mit dem dritten Kontakt 14 verbunden, die es erlauben, den dritten Anschluss zur Energieversorgung der Schutzelektronik 28 des Akkupacks oder zur Datenübertragung zwischen der (Schutz-) Elektronik 28 des Akkupacks und der Steuerelektronik 20, 22 von Elektrohandwerkzeuggerät 4 bzw. Ladegerät 6 zu verwenden.

## Patentansprüche

1. Akkupack (2) für ein Elektrohandwerkzeuggerät (4), welcher mittels eines Ladegeräts (6) wiederaufladbar ist, mit einem analogen temperaturabhängigen Widerstand (16), mit zwei Ladekontakten (10, 12) und einem dritten Kontakt (14), über den der Zustand des temperaturabhängigen Widerstands (16) mittels einer im Elektrohandwerkzeuggerät (4) oder im Ladegerät (6) angeordneten Steuerelektronik (20, 22) erfassbar und auswertbar ist, und mit einer mit dem temperaturabhängigen Widerstand (16) zusammenwirkenden Schutzelektronik (28) im Akkupack (2), **dadurch gekennzeichnet, dass** die Schutzelektronik (28) im Akkupack (2) einen mit dem temperaturabhängigen Widerstand (16) in Reihe angeordneten Schalter (32) umfasst, der in einem von der Schutzelektronik (28) erkannten Fehlerzustand des Akkupacks eine Zuleitung (30) des temperaturabhängigen Widerstands (16) unterbricht, was durch die Steuerelektronik (20, 22) im Elektrohandwerkzeuggerät (4) oder im Ladegerät (6) erfassbar und auswertbar ist, und dass die Schutzelektronik (28) im Akkupack so ausgebildet ist, dass die Unterbrechung der Zuleitung (30) des temperaturabhängigen Widerstands (16) im Fehlerzustand in Abhängigkeit bestimmter Bedingungen periodisch erfolgt.

2. Akkupack nach Anspruch 1, **dadurch gekennzeichnet, dass** der dritte Kontakt (14) zur Energieversorgung einer Elektronik des Akkupacks verwendbar ist.

3. Akkupack nach Anspruch 1 oder 2, **dadurch gekennzeichnet, dass** der dritte Kontakt (14) zur Datenübertragung zwischen einer Elektronik des Akkupacks und der Steuerelektronik (20, 22) des Elektrohandwerkzeuggeräts (4) oder des Ladegeräts (6) verwendbar ist, während die Zuleitung (30) des temperaturabhängigen Widerstands (16) unterbrochen ist.

4. Akkupack nach einem der vorstehenden Ansprüche, **dadurch gekennzeichnet, dass** in einer Zuleitung (34) zu einem Ladekontakt (10) innerhalb des Akkupacks (2) ein Shunt-Widerstand (36) zur Stromüberwachung vorgesehen ist, der von der Schutzelektronik (28) des Akkupacks erfasst wird.

## Claims

1. Battery pack (2) for an electrical hand tool (4) which can be recharged by means of a charging device (6), with a temperature-dependent analogue resistance (16), with two charging contacts (10, 12) and a third contact (14) by means of which the state of the temperature-dependent resistance (16) can be registered and evaluated by an electronic control (20, 22) arranged in the electrical hand tool (4) or in the charging device (6), and with a protective electronic device (28) acting in concert with the temperature-dependent resistance (16) in the battery pack (2), **characterised in that** the protective electronic device (28) in the battery pack (2) comprises a switch (32) arranged in series with the temperature-dependent resistance (16), which switch interrupts a supply line (30) to the temperature-dependent resistance (16) when a faulty state is detected in the battery pack by the protective electronic device (28) and is able to be registered and evaluated by the electronic control (20, 22) in the electrical hand tool (4) or in the charging device (6), and that the protective electronic device (28) in the battery pack is designed such that it periodically interrupts the supply line (30) to the temperature-dependent resistance (16) in a faulty state depending on certain conditions.

2. Battery pack in accordance with claim 1, **characterised in that** the third contact (14) can be used to supply power to an electronics system in the battery pack.

3. Battery pack in accordance with claim 1 or 2, **characterised in that** the third contact (14) can be used to transfer data between an electronics system in the battery pack and the electronic control (20, 22) of the electrical hand tool (4) or of the charging device (6), during the time that the supply line (30) to the temperature-dependent resistance (16) is interrupted.

4. Battery pack in accordance with one of the previous claims, **characterised in that** a shunt resistance (36), registered by the protective electronic device (28) in the battery pack, is provided in a supply line (34) to a charging contact (10) inside the battery pack (2) for monitoring the current.

## Revendications

1. Batterie d'accumulateurs (2) pour un outil à main électrique (4), rechargeable au moyen d'un chargeur (6), avec une résistance analogique (16) dépendant de la température, avec deux contacts de charge (10, 12) et un troisième contact (14) par lequel l'état de la résistance (16) dépendant de la température peut être détecté et évalué au moyen d'une électronique commande (20, 22) disposé dans l'outil à main électrique (4) ou dans le chargeur (6), et avec une électronique de protection (28) coopérant avec la résistance (16) dépendant de la température dans la batterie d'accumulateurs (2), **caractérisée en ce que** l'électronique de protection (28) dans la batterie d'accumulateurs (2) comprend un commutateur (32) monté en série avec la résistance (16) dépendant de la température, ledit commutateur interrompant dans un état d'erreur de la batterie d'accumulateurs, reconnu par l'électronique de protection (28), une ligne d'amenée (30) de la résistance (16) dépendant de la température, ce qui peut être détecté et évalué par l'électronique de commande (20, 22) dans l'outil à main électrique (4) ou dans le chargeur (6), et **en ce que** l'électronique de protection (28) dans la batterie d'accumulateurs est réalisée de telle sorte que l'interruption de la ligne d'amenée (30) de la résistance (16) dépendant de la température a lieu périodiquement dans l'état d'erreur en fonction de certaines conditions.

2. Batterie d'accumulateurs selon la revendication 1, **caractérisée en ce que** le troisième contact (14) peut être utilisé pour l'alimentation en énergie d'une électronique de la batterie d'accumulateurs.

3. Batterie d'accumulateurs selon la revendication 1 ou 2, **caractérisée en ce que** le troisième contact (14) peut être utilisé pour le transfert de données entre une électronique de la batterie d'accumulateurs et l'électronique de commande (20, 22) de l'outil à main électrique (4) ou du chargeur (6), pendant que la ligne d'amenée (30) de la résistance (16) dépendant de la température est interrompue.

4. Batterie d'accumulateurs selon l'une quelconque des revendications précédentes, **caractérisée en ce que** dans une ligne d'amenée (34) allant jusqu'à un contact de charge (10) à l'intérieur de la batterie d'accumulateurs (2), une résistance en dérivation (36) est prévue pour la surveillance du courant qui est détecté par l'électronique de protection (28) de la batterie d'accumulateurs.
